(19) Europäisches Patentamt
European Patent Office
Office européen des brevets

(11) **EP 2 855 969 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **13721348.4**

(22) Anmeldetag: **08.05.2013**

(51) Int Cl.:
**F16D 13/46** (2006.01)     **F16D 13/64** (2006.01)
**F16D 13/75** (2006.01)     **F16F 15/34** (2006.01)

(86) Internationale Anmeldenummer:
**PCT/EP2013/059591**

(87) Internationale Veröffentlichungsnummer:
**WO 2013/174653 (28.11.2013 Gazette 2013/48)**

(54) **WUCHTELEMENT UND VERFAHREN ZUM AUSWUCHTEN EINER KUPPLUNG**

BALANCING ELEMENT AND METHOD FOR BALANCING A CLUTCH

ELÉMENT D'ÉQUILIBRAGE ET PROCÉDÉ D'ÉQUILIBRAGE D'UN EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2012 DE 102012208782**

(43) Veröffentlichungstag der Anmeldung:
**08.04.2015 Patentblatt 2015/15**

(73) Patentinhaber: **Schaeffler Technologies AG & Co. KG**
**91074 Herzogenaurach (DE)**

(72) Erfinder:
• **HAUSS, Mario**
**77694 Kehl-Leutesheim (DE)**
• **STEIGER, Stefan**
**64407 Fränkisch-Crumbach (DE)**
• **LIETZENMAIER, Holger**
**77886 Lauf (DE)**

(56) Entgegenhaltungen:
**DE-A1-102009 007 829     DE-U1-202009 015 716**
**US-A- 5 743 691**

EP 2 855 969 B1

**Beschreibung**

Die Erfindung betrifft eine Kupplungsdeckelanordnung gemäß dem Oberbegriff des Patentanspruchs 1 sowie ein Verfahren zum Auswuchten einer Kupplung, mit deren Hilfe eine Kupplung ausgewuchtet werden kann.

Eine Kupplung zum Kuppeln einer Antriebswelle eines Kraftfahrzeugmotors mit mindestens einer Getriebeeingangswelle weist herstellungsbedingt eine Eigenunwucht auf. Um die Kupplung auf eine spezifische Unwucht herunter zu wuchten, ist es bekannt an geeigneten Stellen Wuchtelemente mit der Kupplung zu vernieten.

Eine Kupplungsdeckelanordnung gemäß dem Oberbegriff des Patentanspruchs 1 ist aus der DE 10 2009 007 829 A1 bekannt.

Es besteht ein ständiges Bedürfnis eine betriebssichere Kupplung einfach und kostengünstig herzustellen.

Es ist die Aufgabe der Erfindung Maßnahmen aufzuzeigen, die eine einfache und kostengünstige Herstellung einer betriebssicheren Kupplung ermöglichen.

Die Lösung der Aufgabe erfolgt erfindungsgemäß durch eine Kupplungsdeckelanordnung mit den Merkmalen des Anspruchs 1 sowie ein Verfahren zum Auswuchten einer Kupplung mit den Merkmalen des Anspruchs 8. Bevorzugte Ausgestaltungen der Erfindung sind in den Unteransprüchen angegeben, die jeweils einzeln oder in Kombination einen Aspekt der Erfindung darstellen können.

Ein Wuchtelement ist zum Auswuchten einer Kupplung vorgesehen mit einem Schaft zum Einsetzen in eine Gehäuseöffnung eines Kupplungsdeckels, einem von dem Schaft axial abstehenden Kopf zur Begrenzung einer Einstecktiefe und von dem Schaft radial abstehende Schneidkanten zum plastischen Verformen einer die Gehäuseöffnung umgebenden Wandung, wobei zwischen den Schneidkanten und dem Kopf ein zu den Schneidkanten beabstandet angeordneter Verformungsanschlag zum plastischen Verformen eines Teils der Wandung zwischen die Schneidkanten und dem Verformungsanschlag vorgesehen ist.

Durch das mit dem Kupplungsdeckel oder einem anderen Bauteil der Kupplung verbindbare Wuchtelement kann die Kupplung ausgewuchtet werden, so dass die dynamischen Belastungen der Kupplung im Betrieb reduziert werden können und ein betriebssicherer Betrieb der Kupplung mit einer erhöhten Lebensdauer erreicht werden kann. Mit Hilfe der vom Schaft des Wuchtelements abstehenden Schneidkanten kann sich das Wuchtelement in den Kupplungsdeckel einschneiden und dadurch einen Presssitz mit einer hohen Haltekraft ausbilden. Die von den Schneidkanten in der Wandung eingeschnittenen Furchen können an der zum Kopf des Wuchtelements weisenden Axialseite dadurch zumindest teilweise verschlossen werden, dass zum Ende des Einsetzvorgangs des Wuchtelements in die Gehäuseöffnung der zwischen den Furchen verbliebenen Teil der Wandung von dem Verformungsansatz plastisch verformt wird. Der Verformungsanschlag kann insbesondere zumindest teilweise in die Wandung eingetrieben werden, wodurch das von dem Verformungsanschlag plastisch verformte Material der Wandung in einen Bereich zwischen den Schneidkanten und dem Verformungsanschlag ausweichen kann. Das von dem Verformungsanschlag verformte Material des Kupplungsdeckels kann dadurch die von den Schneidkanten ausgebildeten Furchen in der Wandung verschließen, so dass sich eine Axialsicherung ausbildet und das Wuchtelement verliersicher in der Gehäuseöffnung gehalten ist. Bei einer auf das Wuchtelement entlang einer Einsetzrichtung wirkenden Axialkraft kann der Kopf des Wuchtelements mit einer Anlagefläche an dem Kupplungsdeckel anschlagen und eine Bewegung des Wuchtelements blockieren. Bei einer auf das Wuchtelement entgegen der Einsetzrichtung wirkenden Axialkraft können die Schneidkanten an dem von dem Verformungsanschlag plastisch verformten Material der Wandung anschlagen, wodurch ebenfalls eine Bewegung des Wuchtelements blockiert ist. Das Wuchtelement kann dadurch auch bei im Betrieb der Kupplung auftretenden Vibrationen nicht aus der Gehäuseöffnung austreten und beispielsweise eine die Kupplung umgebende Kupplungsglocke beschädigen. Durch die plastische Verformung der Wandung in einen Bereich zwischen den Schneidkanten und dem Verformungsanschlag hinein kann das Wuchtelement ohne zusätzliche Werkzeuge auch unter Betriebsbedingungen verliersicher aufgenommen werden, wodurch eine einfache und kostengünstige Herstellung einer betriebssicheren Kupplung ermöglicht ist.

Im Gegensatz zu einem Vernieten des Wuchtelements erfolgt keine plastische Verformung des Wuchtelements sondern eine plastische Verformung der Wandung, die das Wuchtelement im eingesetzten Zustand umgibt. Hierzu weist das Wuchtelement insbesondere eine höhere Härte als die Wandung auf. Die Wandung kann duktiler als das Wuchtelement sein. Das Wuchtelement kann dadurch formschlüssig und/oder verliersicher in der Wandung aufgenommen sein. Im Gegensatz zu einem Vernieten des Wuchtelements erfolgt eine plastische Verformung nicht außerhalb der Gehäuseöffnung sondern innerhalb der Gehäuseöffnung.

Durch das von dem Verformungsanschlag plastisch verformte Material kann eine axiale Sicherung des Wuchtelements ausgebildet werden, so dass keine zusätzliche axiale Sicherung durch einen plastisch verformten Setzkopf einer Nietverbindung oder eine Klebeschicht zwischen dem Wuchtelement und dem Kupplungsdeckel erforderlich ist. Vorzugsweise ist das Wuchtelement ausschließlich durch die von dem Wuchtelement verursachten plastischen Verformungen der Wandung verliersicher fixiert. Da es nicht erforderlich ist das Wuchtelement mit einem weiteren Bauteil zu kontern, wird kein Werkzeug benötigt, mit dessen Hilfe das Kontern und die axiale Fixierung durchgeführt werden muss.

Die Montage ist dadurch vereinfacht. Insbesondere kann das Wuchtelement zum Auswuchten einer Kupplung für ein Kraftfahrzeug zu dem Zweck verwendet werden, dass das Wuchtelement durch eine Kraftaufbringung von ausschließlich genau einer Richtung verliersicher mit der Kupplung verbunden wird. Dadurch kann das Wuchtelement auch an Stellen vorgesehen werden, bei denen eine einfache Zugänglichkeit von einer in Einsteckrichtung weisenden Rückseite des Kupplungsdeckels nicht gegeben ist. Beispielsweise kann das Wuchtelement für eine Kupplung, insbesondere Doppelkupplung, verwendet werden, die eine Verschleißnachstellung mit einem, vorzugsweise mindestens zwei, auf einer Rampe abgleitenden Verstellring aufweist, wobei es möglich ist den Verstellring in axialer Richtung der Kupplung benachbart zum Wuchtelement auf einem gemeinsamen Radius zu positionieren. Ferner kann das Wuchtelement leicht auf einem vergleichsweise großen Radius positioniert werden, so dass zur Bereitstellung eines definierten Massenträgheitsmoments eine entsprechend geringere träge Masse erforderlich ist, wodurch das Gesamtgewicht der Kupplung und die Materialkosten gesenkt werden können.

Durch eine Dimensionierung des Abstands zwischen dem entgegen der Einsetzrichtung weisenden Ende der Schneidkanten und der in Einsetzrichtung weisenden Anschlagfläche des Verformungsanschlags sowie dem Abstand zwischen der Anschlagfläche des Verformungsanschlags und der Anlagefläche des Kopfes kann das Ausmaß und/oder die Gestaltung des von dem Verformungsanschlag plastisch verformten Materials der Wandung eingestellt werden. Je größer die Abstände gewählt sind, desto mehr Material der Wandung kann von dem Verformungsanschlag plastisch verformt werden, um eine besonders sichere Axialsicherung auszubilden. Je geringer die Abstände gewählt sind, desto weniger Material der Wandung kann von dem Verformungsanschlag plastisch verformt werden, so dass eine geringere Formänderungsarbeit beim Einsetzen des Wuchtelements erforderlich ist. Wenn der Abstand zwischen dem Ende der Schneidkanten und der Anschlagfläche vergleichsweise gering und der Abstand zwischen der Anschlagfläche und der Anlagefläche vergleichsweise groß gewählt sind, wird das zwischen dem Ende der Schneidkanten und der Anschlagfläche verbleibende Volumen zu einem größeren Anteil mit dem plastisch verformten Material der Wandung gefüllt, so dass insbesondere das plastisch verformten Material vergleichsweise weit nach radial innen ausweichen kann, um die entgegen der Einsetzrichtung weisenden Furchen möglichst vollständig zu verfüllen.

Der Durchmesser des Kopfes und/oder der Durchmesser des Schaftes sind insbesondere derart gewählt, um eine definierte träge Masse und/oder eine definierte Position des Schwerpunkts des Wuchtelements einzustellen. Der Schaft kann insbesondere an dem in Einsteckrichtung weisenden und von dem Kopf wegweisenden Ende eine Einführungsfase aufweisen, wodurch ein Einfädeln des Wuchtelements in die Gehäuseöffnung sowie ein Zentrieren des Wuchtelements in der Gehäuseöffnung bevor die Schneidkanten eine plastische Verformung der Wandung vornehmen zu erleichtern. Insbesondere weist der Schaft vorzugsweise zwischen der Einführungsfase und den Schneidkanten eine in Umfangsrichtung umlaufende Zentrierfläche auf, die insbesondere mit der Gehäuseöffnung eine Spiel- oder Übergangspassung ausbildet. Die Schneidkanten können insbesondere an ihrem in Einsteckrichtung weisenden Ende angefasst sein, um eine Selbstzentrierung zu erreichen und/oder das Ausmaß der plastischen Verformung über die Länge der axialen Erstreckung allmählich zu steigern. Beispielsweise kann sich der Außendurchmesser der Schneidkanten entgegen der Einsteckrichtung allmählich erhöhen, wobei als Nenndurchmesser der Schneidkanten der maximal größte Außendurchmesser verstanden wird. Die Schneidkanten und die zwischen den Schneidkanten ausgebildeten Laufbahnen können insbesondere durch Massivumformen des Wuchtelements, insbesondere des Schafts, kostengünstig hergestellt werden.

Insbesondere ist zwischen den Scheidkanten und dem Verformungsanschlag eine umlaufende Nut ausgebildet ist, wobei insbesondere die Nut an der dem Kopf zugeordneten Axialseite durch den Verformungsanschlag begrenzt ist. Die Nut kann teilweise oder nahezu vollständig von dem von dem Verformungsanschlag plastisch verformten Material der Wandung gefüllt werden, so dass sich eine sichere Verliersicherung ergibt. Insbesondere ist die Nut derart dimensioniert, dass das in die Nut hineingepresste Material der Wandung im Wesentlichen vollständig in Umfangsrichtung umlaufend verformt ist. Vorzugsweise ist die Nut derart dimensioniert, dass das in die Nut hineingepresste Material der Wandung die Nut in axialer Richtung füllt. Das heißt, das in die Nut hineingepresste Material der Wandung kann in Umfangsrichtung zumindest teilweise an beiden Axialseiten der Nut anliegen. Vorzugsweise ist die eine Axialseite der Nut zumindest teilweise durch die entgegen der Einsteckrichtung weisenden axialen Enden der Schneidkanten und/oder die andere Axialseite der Nut durch die Anschlagfläche des Verformungsanschlags ausgebildet.

Vorzugsweise weist die Nut einen in radialer Richtung weisenden Nutgrund mit einem Durchmesser $D_N$ auf, wobei zwischen den Schneidkanten Bahnen ausgebildet sind und die Bahnen einen in radialer Richtung weisenden Bahngrund mit einem Durchmesser $D_B$ aufweisen, wobei für das Verhältnis von $D_N/D_B$ $0{,}90 \leq D_N/D_B \leq 1{,}00$, insbesondere $0{,}95 \leq D_N/D_B \leq 0{,}99$ und vorzugsweise $0{,}97 \leq D_N/D_B \leq 0{,}98$ gilt. Der Nutgrund der Nut kann dadurch im Wesentlichen dem Bahngrund der zwischen den Scheidkanten ausgebildeten insbesondere im Wesentlichen axial verlaufenden Bahnen entsprechen oder im Vergleich zum Bahngrund etwas niedriger ausgeführt sein. Dadurch ist ermöglicht, dass die gesamte Querschnittsfläche der von den Schneidkanten in die Wandung eingeschnittenen Furchen im Wesentlichen vollständig von dem von dem Verformungsanschlag plastisch verformten Material der Wandung verschlossen werden kann. Der Durchmesser des Nutgrunds kann bezogen auf den Durchmesser des Bahngrunds unter Berücksichtung des elastischen Anteils der Verformung des von dem Verformungsanschlag verformten Materials gewählt sein, so dass auch nach einer elastischen Rückverformung das plastisch verformte Material der Wandung die Querschnittsfläche der Furchen im Wesentlichen vollständig abdecken kann.

Besonders bevorzugt weisen der Verformungsanschlag einen Außendurchmesser $D_V$ und die Schneidkanten einen Außendurchmesser $D_S$ auf, wobei für das Verhältnis von $D_V/D_S$ $0{,}90 \leq D_V/D_S \leq 1{,}05$, insbesondere $0{,}95 \leq D_V/D_S \leq 1{,}03$ und vorzugsweise $D_V/D_S = 1{,}00 \pm 0{,}02$ gilt. Der Außendurchmesser des Verformungsanschlags kann dadurch im Wesentlichen dem Außendurchmesser der Schneidkanten entsprechen, so dass der Verformungsanschlag im Wesentlichen auf die Axialfläche des zwischen den von Schneidkanten ausgebildeten Furchen verbleibenden Materials der Wandung einwirkt. Die von dem Wuchtelement über den Verformungsanschlag aufgebrachte Kraft kann dadurch im Vergleich zu einem Vollring auf eine geringere Fläche konzentriert werden, so dass sich eine höhere Flächenpressung ergibt und damit leichter die Fließgrenze des Materials der Wandung überschritten werden kann, um die plastische Verformung der Wandung herbeizuführen.

Insbesondere weist der Kopf eine Anlagefläche zur axialen Anlage an dem Kupplungsdeckel auf, wobei die Anlagefläche in radialer Richtung über einen Spalt zu dem Verformungsanschlag radial beabstandet ist. Die Anlagefläche kann insbesondere koaxial zum Verformungsanschlag positioniert sind. Die Anlagefläche ist vorzugsweise als geschlossene Ringfläche ausgebildet. Durch den Spalt kann die Anlagefläche an dem Kupplungsdeckel in einem Bereich anliegen, der von einem gegebenenfalls plastisch verformten Beeich der Wandung radial außerhalb des Verformungsanschlags beabstandet ist. Die axiale Endlage des Wuchtelements ist dadurch nicht durch die plastische Verformung der Wandung durch den Verformungsanschlag beeinflusst. Die axiale Positionierung des Wuchtelements und dadurch insbesondere die axiale Positionierung des Massenschwerpunkts des Wuchtelements kann trotz der plastischen Verformung eines Teils des Kupplungsdeckels im Bereich der Wandung der Gehäuseöffnung mit hoher Präzision erfolgen.

Die Erfindung betrifft ferner eine Verwendung eines Wuchtelements, das wie vorstehend beschrieben aus- und weitergebildet sein kann, zum Auswuchten einer Kupplung für ein Kraftfahrzeug zu dem Zweck, dass das Wuchtelement durch eine Kraftaufbringung von ausschließlich genau einer Richtung verliersicher mit der Kupplung verbunden wird. Durch die plastische Verformung der Wandung in einen Bereich zwischen den Schneidkanten und dem Verformungsanschlag hinein kann das Wuchtelement ohne zusätzliche Werkzeuge auch unter Betriebsbedingungen verliersicher aufgenommen werden, wodurch eine einfache und kostengünstige Herstellung einer betriebssicheren Kupplung ermöglicht ist.

Die Erfindung betrifft ferner eine Kupplungsdeckelanordnung für eine Kupplung, insbesondere eine Doppelkupplung mit jeweils einer zwei Verstellringe aufweisenden Nachstelleinrichtung für jede Teilkupplung, mit einem Kupplungsdeckel, wobei der Kupplungsdeckel mindestens eine durch eine Wandung begrenzte Gehäuseöffnung aufweist, und mindestens einen in die Gehäuseöffnung eingesetzten Wuchtelement, das wie vorstehend beschrieben aus- und weitergebildet sein kann, wobei das Wuchtelement durch eine Verformung der Wandung durch den Verformungsanschlag verliersicher aufgenommen ist. Durch die plastische Verformung der Wandung in einen Bereich zwischen den Schneidkanten und dem Verformungsanschlag hinein kann das Wuchtelement ohne zusätzliche Werkzeuge auch unter Betriebsbedingungen verliersicher aufgenommen werden, wodurch eine einfache und kostengünstige Herstellung einer betriebssicheren Kupplung ermöglicht ist.

Insbesondere weist das Wuchtelement einen radial innerhalb der Wandung des Kupplungsdeckels in der Gehäuseöffnung liegenden Schwerpunkt auf. Dadurch ist vermieden, dass im Betrieb der Kupplung durch an dem Wuchtelement angreifende Fliehkräfte ein Hebelmoment an dem Wuchtelement angreift, das auf das Wuchtelement eine Kraft in axialer Richtung aufprägt. Ein Lösen des Wuchtelements aus der Gehäuseöffnung kann dadurch vermieden werden. Ferner ist eine geringere plastische Verformung des von dem Verformungsanschlag verformten Materials erforderlich um eine ausreichende Axialsicherung auszubilden.

Die Erfindung betrifft ferner eine Kupplung zum Kuppeln einer Antriebswelle eines Kraftfahrzeugmotors mit mindestens einer Getriebeeingangswelle eines Kraftfahrzeuggetriebes, mit einer Gegenplatte, einer relativ zur Gegenplatte verlagerbaren Anpressplatte zum reibschlüssigen Verpressen einer Kupplungsscheibe zwischen der Gegenplatte und der Anpressplatte, und einer Kupplungsdeckelanordnung, die wie vorstehend beschrieben aus- und weitergebildet sein kann, wobei insbesondere der Schaft des Wuchtelements in eine Plattenöffnung der Gegenplatte hineinragt. Durch die plastische Verformung der Wandung in einen Bereich zwischen den Schneidkanten und dem Verformungsanschlag hinein kann das Wuchtelement ohne zusätzliche Werkzeuge auch unter Betriebsbedingungen verliersicher aufgenommen werden, wodurch eine einfache und kostengünstige Herstellung einer betriebssicheren Kupplung ermöglicht ist. Das das Wuchtelement nicht gekontert werden muss, ist es möglich das Wuchtelement an Stellen der Kupplung vorzusehen, die von der von dem Kopf des Wuchtelements abgewandten Seite nicht oder nur schwer zugänglich sind. Beispielsweise kann die Gegenplatte mehrere jeweils eine Gehäuseöffnung des Kupplungsdeckels gegenüberliegende Plattenöffnungen aufweisen, wobei in Abhängigkeit der Eigenunwucht der Kupplung eine oder mehrere besonders geeignete Gehäuseöffnung zur Positionierung eines Wuchtelements mit einer definierten Eigenmasse ausgewählt werden kann, wobei insbesondere auch verschiedene Wuchtelemente mit verschiedenen Eigenmassen verwendet werden könnten. Der Schaft des jeweiligen Wuchtelements kann hierbei in die jeweilige Plattenöffnung hineinragen, so dass der Schaft des Wuchtelements nicht mit anderen Funktionselementen der Kupplung, beispielsweise Verstellringe einer Nachstelleinrichtung zum Nachstellen eines verschleißbedingten Fehlabstands der Anpressplatte zur Gegenplatte, kollidieren kann. Daher ist es problemlos möglich, dass die Kupplung eine Nachstelleinrichtung mit insbesondere zwei Verstellringen Nachstelleinrichtung zum Nachstellen eines verschleißbedingten Fehlabstands der Anpressplatte zur Gegenplatte aufweist.

Die Erfindung betrifft ferner ein Verfahren zum Auswuchten einer Kupplung, insbesondere einer Doppelkupplung mit jeweils einer zwei Verstellringe aufweisenden Nachstelleinrichtung für jede Teilkupplung, bei dem eine einen Kupplungsdeckel aufweisende Kupplung bereitgestellt wird, wobei der Kupplungsdeckel eine durch eine Wandung begrenzte Gehäuseöffnung aufweist, nachfolgend ein Wuchtelement, das insbesondere wie vorstehend beschrieben aus- und weitergebildet sein kann, entlang einer Einsetzrichtung, insbesondere motorseitig, in die Gehäuseöffnung eingesetzt wird, wobei die Wandung von dem Wuchtelement derart plastisch verformt wird, dass das Wuchtelement verliersicher in dem Gehäusedeckel gehalten ist. Das Verfahren kann insbesondere wie vorstehend am Beispiel des Wuchtelements erläutert aus- und weitergebildet sein. Durch die plastische Verformung der Wandung in einen Bereich zwischen den Schneidkanten und dem Verformungsanschlag hinein kann das Wuchtelement ohne zusätzliche Werkzeuge auch unter Betriebsbedingungen verliersicher aufgenommen werden, wodurch eine einfache und kostengünstige Herstellung einer betriebssicheren Kupplung ermöglicht ist.

Insbesondere schneidet das Wuchtelement bei dem Einsetzen in die Gehäuseöffnung zunächst im Wesentlichen axial verlaufende Furchen in die Wandung und nachfolgend werden die Furchen an einer der Einsetzrichtung entgegen weisenden Axialseite durch eine plastische Verformung der Wandung durch das Wuchtelement zumindest teilweise verschlossen. Die plastische Verformung der Wandung zur Herstellung der Furchen, insbesondere durch die Schneidkanten des Wuchtelements, einerseits und die plastische Verformung der Wandung zum zumindest teilwesen Verschließen der Furchen, insbesondere durch den Verformungsanschlag des Wuchtelements, andererseits können zeitlich nacheinander erfolgen, wobei hierfür insbesondere das Wuchtelement ohne zeitliche Unterbrechung kontinuierlich in die Gehäuseöffnung des Kupplungsdeckels eingetrieben wird. Dadurch können beide plastischen Verformungen in einem Arbeitsgang durchgeführt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

Fig. 1:     eine schematische perspektivische Ansicht eines Wuchtelements,

Fig. 2:     eine schematische Seitenansicht des Wuchtelements aus Fig. 1,

Fig. 3:     eine schematische perspektivische Ansicht einer Doppelkupplung mit dem Wuchtelement aus Fig. 1,

Fig. 4:     eine schematische Detailansicht der Doppelkupplung aus Fig. 3 und

Fig. 5:     eine schematische Schnittansicht einer in Fig. 4 dargestellten Kupplungsdeckelanordnung.

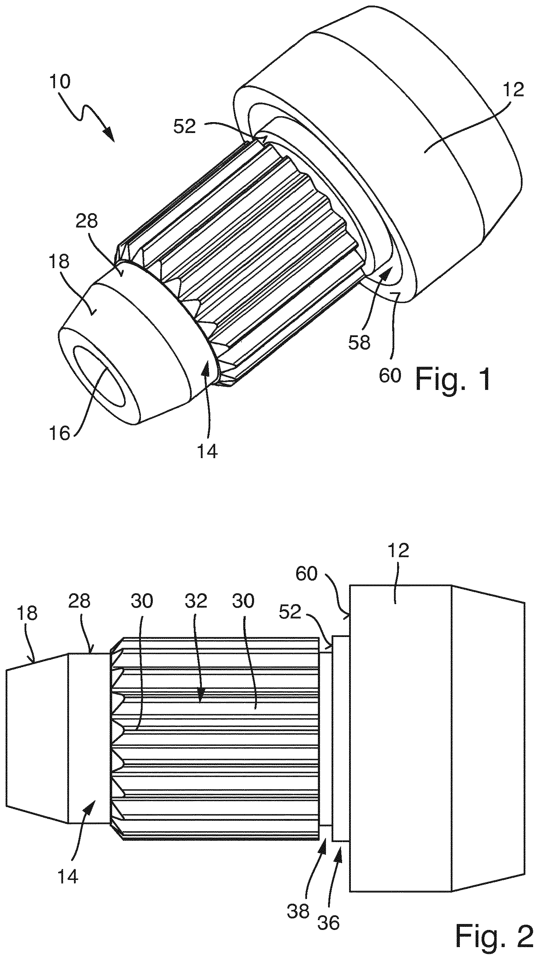

Das in Fig. 1 und Fig. 2 dargestellte Wuchtelement 10 weist einen mit einem Kopf 12 einstückig verbundenen Schaft 14 auf, wobei der Kopf 12 und/oder der Schaft 14 eine Aushöhlung 16 aufweisen kann, um die Gesamtmasse und/oder die Position des Massenschwerpunkts des Wuchtelements 10 einstellen zu können. Der Schaft 14 weis an seinem von dem Kopf 12 wegweisenden Ende eine Einführungsfase 18 auf, um das Wuchtelement 10 leicht in eine durch eine Wandung 20 begrenzte Gehäuseöffnung 22 eines Kupplungsdeckels 24 oder eines anderen Bauteils, insbesondere einer Kupplung 26, einsetzen zu können. An die Einführungsfase 18 schließt sich eine in Umfangsrichtung umlaufende Zentrierfläche 28 an, über die eine erste Zentrierung des Wuchtelements 10 in der Gehäuseöffnung 22 erfolgen kann. Von dem Schaft 14 stehen in radialer Richtung mehrere im Querschnitt im Wesentlichen dreieckige Schneidkanten 30 ab, zwischen denen im Wesentlichen axial verlaufende Bahnen 32 ausgebildet sind. Die Schneidkanten 30 können in axialer Richtung angeschrägt sein, um ein Zentrieren des Wuchtelements 10 in der Gehäuseöffnung 22 und/oder ein Einschneiden von Furchen 34 in die Wandung 20 zu erleichtern. Zwischen dem Kopf 12 und den Schneidkanten 30 ist ein Verformungsanschlag 36 vorgesehen, der über eine in Umfangsrichtung durchgängige Nut 38 zu den Schneidkanten 30 beabstandet ist.

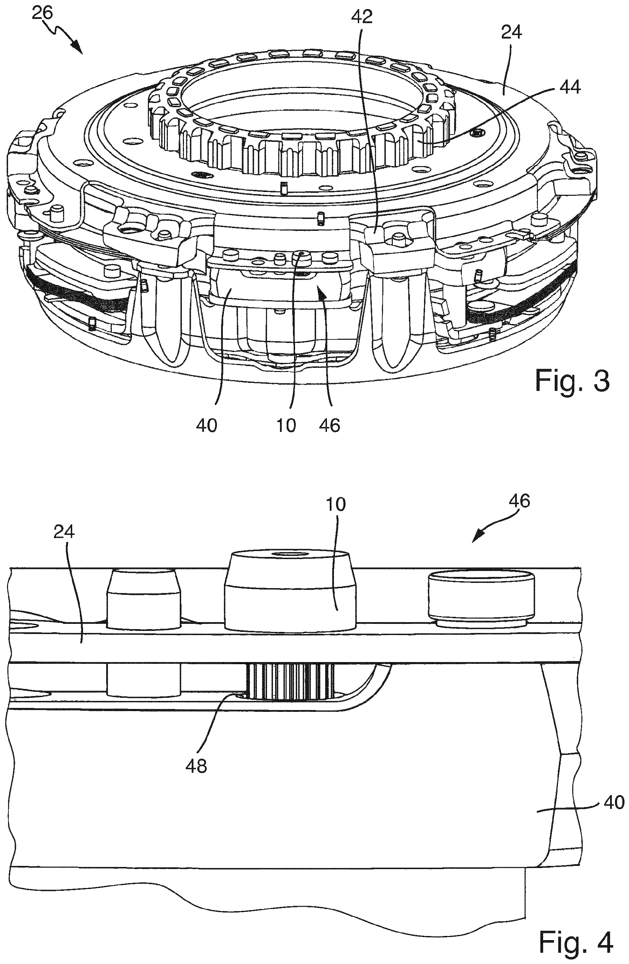

Das Wuchtelement 10 kann zum Auswuchten der in Fig. 3 dargestellten aus Doppelkupplung ausgebildeten Kupplung 26 verwendet werden. Die Kupplung 26 weist eine relativ zu einer Gegenplatte 40 verlagerbare Anpressplatte 42 zum reibschlüssigen Verpressen einer Kupplungsscheibe zwischen der Gegenplatte 40

und der Anpressplatte 42 auf, wobei mit der Gegenplatte 40 der Kupplungsdeckel 24 verbunden ist. Im dargestellten Ausführungsbeispiel ist der Kupplungsdeckel 24 motorseitig vorgesehen und kann über eine Steckverzahnung 44 insbesondere mit einem Drehschwingungsdämpfer, insbesondere ein Zweimassenschwungrad, drehfest verbunden werden, der mit einer Antriebswelle eines Kraftfahrzeugmotors verbunden werden kann. Der Kupplungsdeckel 24 kann in der Art eines Mitnehmerrings eine Ausgangsseite des Drehschwingungsdämpfer mit der Gegenplatte 40 der Kupplung 26 koppeln.

Die Kupplung 26 weist eine in Fig. 4 dargestellte Kupplungsdeckelanordnung 46 auf, in dessen Kupplungsdeckel 24 das Wuchtelement 10 eingesetzt ist. Der Schaft 14 des Wuchtelements 10 kann in eine Plattenöffnung 48 der Gegenplatte 40 mit viel Spiel hineinragen. Das Wuchtelement 10 ist dadurch getriebeseitig nicht zugänglich.

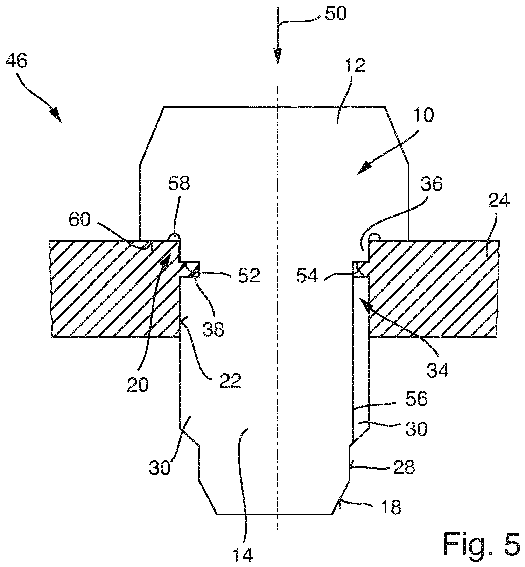

Wie in Fig. 5 dargestellt können die Schneidkanten 30 bei einem Einstecken des Wuchtelements 10 entlang einer Einsteckrichtung 50 in die von der Wandung 20 begrenzten Gehäuseöffnung 22 die Furchen 34 einschneiden. Danach kann der Verformungsanschlag 36 mit einer Anschlagfläche 52 an dem zwischen den Furchen 34 verbleibenden Material der Wandung anschlagen und dieses Material in die Nut 38 hinein plastisch verformen, so dass die Furchen 34 an dem zum Kopf 12 weisenden Ende verschlossen werden können, um eine Axialsicherung auszubilden, die das Wuchtelement 10 verliersicher mit dem Kupplungsdeckel 24 formschlüssig verbindet. Um genügend von dem Verformungsanschlag 36 plastisch verformtes Material aufnehmen zu können und insbesondere die Furchen 34 vollständig zu verschließen, kann die Nut 38 eine Nutgrund 54 mit einem kleineren Durchmesser als ein Bahngrund 56 der zwischen den Schneidkanten 30 ausgebildeten Bahnen 32 des Wuchtelements 10 aufweisen. Eine weitere Verformung der Wandung 20 endet, wenn der Kopf 12 mit einer zum Verformungsanschlag 36 über einen ringförmigen Spalt 58 beabstandeten Anlagefläche 60 an dem Kupplungsdeckel 24 zur Anlage kommt.

## Bezugszeichenliste

10 Wuchtelement
12 Kopf
14 Schaft
16 Aushöhlung
18 Einführungsfase
20 Wandung
22 Gehäuseöffnung
24 Kupplungsdeckel
26 Kupplung
28 Zentrierfläche
30 Schneidkanten
32 Bahn
34 Furche
36 Verformungsanschlag
38 Nut
40 Gegenplatte
42 Anpressplatte
44 Steckverzahnung
46 Kupplungsdeckelanordnung
48 Plattenöffnung
50 Einsteckrichtung
52 Anschlagfläche
54 Nutgrund
56 Bahngrund
58 Spalt
60 Anlagefläche

## Patentansprüche

1. Kupplungsdeckelanordnung (46) für eine Kupplung (26), mit einem Kupplungsdeckel (24), wobei der Kupplungsdeckel (24) mindestens eine durch eine Wandung (20) begrenzte Gehäuseöffnung (22) aufweist, und mit mindestens einem in die Gehäuseöffnung (22) eingesetzten Wuchtelement (10) zum Auswuchten der Kupplung (26), wobei das Wuchtelement (10) einen Schaft (14) zum Einsetzen in die Gehäuseöffnung (22) des Kupplungsdeckels (24) und einen vom Schaft (14) axial abstehenden Kopf (12) zur Begrenzung einer Einstecktiefe aufweist, **dadurch gekennzeichnet, dass** das Wuchtelement (10) ferner vom Schaft (14) radial abstehende Schneidkanten (30) zum plastischen Verformen einer die Gehäuseöffnung (22) umgebenden Wandung (20) aufweist, wobei zwischen den Schneidkanten (30) und dem Kopf (12) ein zu den Schneidkanten (30) beabstandet angeordneter Verformungsanschlag (36) zum plastischen Verformen eines Teils der Wandung (20) zwischen die Schneidkanten (30) und dem Verformungsanschlag (36) vorgesehen ist, wobei das Wuchtelement (10) durch die Verformung der Wandung (20) durch den Verformungsanschlag (36) verliersicher aufgenommen ist.

2. Kupplungsdeckelanordnung (46) nach Anspruch 1 **dadurch gekennzeichnet, dass** zwischen den Scheidkanten (30) und dem Verformungsanschlag (36) eine umlaufende Nut (38) ausgebildet ist, wobei insbesondere die Nut (38) an der dem Kopf (12) zugeordneten Axialseite durch den Verformungsanschlag (36) begrenzt ist.

3. Kupplungsdeckelanordnung (46) nach Anspruch 2 **dadurch gekennzeichnet, dass** die Nut (38) einen in radialer Richtung weisenden Nutgrund (54) mit einem Durchmesser $D_N$ aufweist, wobei zwischen den Schneidkanten (30) Bahnen (32) ausgebildet sind und die Bahnen (32) einen in radialer Richtung weisenden Bahngrund (56) mit einem Durchmesser

$D_B$ aufweisen, wobei für das Verhältnis von $D_N/D_B$ $0{,}90 \leq D_N/D_B \leq 1{,}00$, insbesondere $0{,}95 \leq D_N/D_B \leq 0{,}99$ und vorzugsweise $0{,}97 \leq D_N/D_B \leq 0{,}98$ gilt.

4. Kupplungsdeckelanordnung (46) nach einem der Ansprüche 1 bis 3 **dadurch gekennzeichnet, dass** der Verformungsanschlag (36) einen Außendurchmesser $D_V$ und die Schneidkanten (30) einen Außendurchmesser $D_S$ aufweisen, wobei für das Verhältnis von $D_V/D_S$ $0{,}90 \leq D_V/D_S \leq 1{,}05$, insbesondere $0{,}95 \leq D_V/D_S \leq 1{,}03$ und vorzugsweise

$$D_V/D_S = 1{,}00 \pm 0{,}02 \text{ gilt.}$$

5. Kupplungsdeckelanordnung (46) nach einem der Ansprüche 1 bis 4 **dadurch gekennzeichnet, dass** der Kopf (12) eine Anlagefläche (60) zur axialen Anlage an dem Kupplungsdeckel (24) aufweist, wobei die Anlagefläche (60) in radialer Richtung über einen Spalt (58) zu dem Verformungsanschlag (36) radial beabstandet ist.

6. Kupplungsdeckelanordnung (46) nach einem der Ansprüche 1 bis 5 **dadurch gekennzeichnet, dass** das Wuchtelement (10) einen radial innerhalb der Wandung (20) des Kupplungsdeckels (24) in der Gehäuseöffnung (22) liegenden Schwerpunkt aufweist.

7. Kupplung (26) zum Kuppeln einer Antriebswelle eines Kraftfahrzeugmotors mit mindestens einer Getriebeeingangswelle eines Kraftfahrzeuggetriebes, mit einer Gegenplatte (40), einer relativ zur Gegenplatte (40) verlagerbaren Anpressplatte (42) zum reibschlüssigen Verpressen einer Kupplungsscheibe zwischen der Gegenplatte (40) und der Anpressplatte (42), und einer Kupplungsdeckelanordnung (46) nach einem der Ansprüche 1 bis 6, wobei insbesondere der Schaft (14) des Wuchtelements (10) in eine Plattenöffnung (48) der Gegenplatte (40) hineinragt.

8. Verfahren zum Auswuchten einer Kupplung (26), bei dem eine einen Kupplungsdeckel (24) aufweisende Kupplung (26) bereitgestellt wird, wobei der Kupplungsdeckel (24) eine durch eine Wandung (20) begrenzte Gehäuseöffnung (22) aufweist, nachfolgend ein Wuchtelement (10), das einen Schaft (14) zum Einsetzen in die Gehäuseöffnung (22) des Kupplungsdeckels (24), einen vom Schaft (14) axial abstehenden Kopf (12) zur Begrenzung einer Einstecktiefe und vom Schaft (14) radial abstehende Schneidkanten (30) zum plastischen Verformen einer die Gehäuseöffnung (22) umgebenden Wandung (20) aufweist, entlang einer Einsetzrichtung (50) in die Gehäuseöffnung (22) eingesetzt wird, wobei zwischen den Schneidkanten (30) und dem Kopf (12) ein zu den Schneidkanten (30) beabstandet angeordneter Verformungsanschlag (36) vorgesehen ist, und die Wandung (20) durch den Verformungsanschlag (36) derart plastisch verformt wird, dass das Wuchtelement (10) verliersicher im Gehäusedeckel (24) gehalten wird.

9. Verfahren nach Anspruch 8, bei dem das Wuchtelement (10) beim Einsetzen in die Gehäuseöffnung (22) zunächst im Wesentlichen axial verlaufende Furchen (34) in die Wandung (20) schneidet und nachfolgend die Furchen (34) an einer der Einsetzrichtung (50) entgegen weisenden Axialseite durch eine plastische Verformung der Wandung (20) durch das Wuchtelement (10) zumindest teilweise verschlossen werden.

## Claims

1. Clutch cover arrangement (46) for a clutch (26), having a clutch cover (24), wherein the clutch cover (24) has at least one housing opening (22) which is delimited by a wall (20), and having at least one balancing element (10) which is inserted into the housing opening (22) and which serves for balancing the clutch (26), wherein the balancing element (10) has a shank (14) for insertion into the housing opening (22) of the clutch cover (24) and has a head (12) which projects axially from the shank (14) and which serves for limiting an insertion depth, **characterized in that** the balancing element (10) furthermore has cutting edges (30) which protrude radially from the shank (14) and which serve for plastically deforming a wall (20) surrounding the housing opening (22), wherein, between the cutting edges (30) and the head (12), there is provided a deformation stop (36) which is arranged spaced apart from the cutting edges (30) and which serves for plastically deforming a part of the wall (20) between the cutting edges (30) and the deformation stop (36), wherein the balancing element (10) is received in captively retained fashion as a result of the deformation of the wall (20) by the deformation stop (36).

2. Clutch cover arrangement (46) according to Claim 1, **characterized in that** an encircling groove (38) is formed between the cutting edges (30) and the deformation stop (36), wherein, in particular, the groove (38) is delimited, on the axial side assigned to the head (12), by the deformation stop (36).

3. Clutch cover arrangement (46) according to Claim 2, **characterized in that** the groove (38) has a groove base (54) which points in a radial direction and which has a diameter $D_N$, wherein tracks (32) are formed between the cutting edges (30), and the tracks (32) have a track base (56) which points in the radial direction and which has a diameter $D_B$,

wherein, for the ratio $D_N/D_B$, the following applies: $0.90 \leq D_N/D_B \leq 1.00$, in particular $0.95 \leq D_N/D_B < 0.99$, and preferably $0.97 \leq D_N/D_B \leq 0.98$.

4. Clutch cover arrangement (46) according to any of Claims 1 to 3, **characterized in that** the deformation stop (36) has an outer diameter $D_V$ and the cutting edges (30) have an outer diameter $D_S$, wherein, for the ratio $D_V/D_S$, the following applies: $0.90 \leq D_V/D_S \leq 1.05$, in particular $0.95 \leq D_V/D_S \leq 1.03$, and preferably $D_V/D_S = 1.00 \pm 0.02$.

5. Clutch cover arrangement (46) according to any of Claims 1 to 4, **characterized in that** the head (12) has an abutment surface (60) for axial abutment against the clutch cover (24), wherein the abutment surface (60) is radially spaced apart from the deformation stop (36) in a radial direction by means of a gap (58).

6. Clutch cover arrangement (46) according to any of Claims 1 to 5, **characterized in that** the balancing element (10) has a centre of gravity situated radially within the wall (20) of the clutch cover (24) in the housing opening (22).

7. Clutch (26) for coupling a driveshaft of a motor vehicle engine to at least one transmission input shaft of a motor vehicle transmission, having a counterplate (40), having a pressure plate (42) which is displaceable relative to the counterplate (40) and which serves for compressing a clutch disk between the counterplate (40) and the pressure plate (42) in frictionally engaging fashion, and having a clutch cover arrangement (46) according to any of Claims 1 to 6, wherein, in particular, the shank (14) of the balancing element (10) projects into a plate opening (48) of the counterplate (40).

8. Method for balancing a clutch (26), in which method a clutch (26) which has a clutch cover (24) is provided, wherein the clutch cover (24) has a housing opening which is delimited by a wall (20), and subsequently a balancing element (10) which has a shank (14) for insertion into the housing opening (22) of the clutch cover (24), a head (12) which projects axially from the shank (14) and which serves for limiting an insertion depth, and cutting edges (30) which protrude radially from the shank (14) and which serve for plastically deforming a wall (20) surrounding the housing opening (22), is inserted along an insertion direction (50) into the housing opening (22), wherein, between the cutting edges (30) and the head (12), there is provided a deformation stop (36) which is arranged spaced apart from the cutting edges (30), and the wall (20) is plastically deformed by the deformation stop (36) such that the balancing element (10) is held in captively retained fashion in the housing cover (24).

9. Method according to Claim 8, in which method the balancing element (10), during the insertion into the housing opening (22), firstly cuts substantially axially running grooves (34) into the wall (20), and subsequently, the grooves (34) are at least partially closed, at an axial side pointing counter to the insertion direction (50), by means of plastic deformation of the wall (20) by the balancing element (10).

**Revendications**

1. Ensemble de couvercle d'embrayage (46) pour un embrayage (26), comprenant un couvercle d'embrayage (24), le couvercle d'embrayage (24) comprenant au moins une ouverture de carter (22) limitée par une paroi (20), et comprenant au moins un élément d'équilibrage (10) inséré dans l'ouverture de carter (22) et servant à l'équilibrage de l'embrayage (26), l'élément d'équilibrage (10) comprenant une tige (14) destinée à être insérée dans l'ouverture de carter (22) du couvercle d'embrayage (24) et une tête (12) faisant saillie axialement à partir de la tige (14) et destinée à limiter une profondeur d'insertion, **caractérisé en ce que** l'élément d'équilibrage (10) comprend en outre des arêtes de coupe (30) faisant saillie radialement à partir de la tige (14) et servant à la déformation plastique d'une paroi (20) entourant l'ouverture de carter (22), une butée de déformation (36) disposée de manière espacée des arêtes de coupe (30) et servant à la déformation plastique d'une partie de la paroi (20) entre les arêtes de coupe (30) et la butée de déformation (36) étant prévue entre les arêtes de coupe (30) et la tête (12), l'élément d'équilibrage (10) étant logé de manière imperdable au moyen de la déformation de la paroi (20) par la butée de déformation (36).

2. Ensemble de couvercle d'embrayage (46) selon la revendication 1, **caractérisé en ce qu'**une rainure périphérique (38) est formée entre les arêtes de coupe (30) et la butée de déformation (36), la rainure (38) étant en particulier limitée, sur le côté axial associé à la tête (12), par la butée de déformation (36).

3. Ensemble de couvercle d'embrayage (46) selon la revendication 2, **caractérisé en ce que** la rainure (38) comprend un fond de rainure (54), tourné dans la direction radiale, présentant un diamètre $D_N$, des voies (32) étant formées entre les arêtes de coupe (30) et les voies (32) comprenant un fond de voie (56), tourné dans la direction radiale, présentant un diamètre $D_B$, et pour le rapport de $D_N/D_B$, l'on a $0{,}90 \leq D_N/D_B \leq 1{,}00$, en particulier $0{,}95 \leq D_N/D_B \leq 0{,}99$, et de préférence $0{,}97 \leq D_N/D_B \leq 0{,}98$.

**4.** Ensemble de couvercle d'embrayage (46) selon l'une quelconque des revendications 1 à 3, **caractérisé en ce que** la butée de déformation (36) présente un diamètre extérieur $D_V$ et les arêtes de coupe (30) présentent un diamètre extérieur $D_S$, et pour le rapport de $D_V/D_S$, l'on a $0{,}90 \le D_V/D_S \le 1{,}05$, en particulier $0{,}95 \le D_V/D_S \le 1{,}03$, et de préférence $D_V/D_S = 1{,}00 \pm 0{,}02$.

**5.** Ensemble de couvercle d'embrayage (46) selon l'une quelconque des revendications 1 à 4, **caractérisé en ce que** la tête (12) comprend une surface d'appui (60) pour l'appui axial contre le couvercle d'embrayage (24), la surface d'appui (60) étant espacée radialement dans la direction radiale par rapport à la butée de déformation (36) par le biais d'un interstice (58).

**6.** Ensemble de couvercle d'embrayage (46) selon l'une quelconque des revendications 1 à 5, **caractérisé en ce que** l'élément d'équilibrage (10) présente un centre de gravité situé radialement à l'intérieur de la paroi (20) du couvercle d'embrayage (24) dans l'ouverture de carter (22).

**7.** Embrayage (26) servant à accoupler un arbre d'entraînement d'un moteur de véhicule automobile à au moins un arbre d'entrée d'une boîte de vitesses de véhicule automobile, comprenant un plateau de réaction (40), un plateau de pression (42) déplaçable par rapport au plateau de réaction (40) et servant à comprimer par friction un disque d'embrayage entre le plateau de réaction (40) et le plateau de pression (42), et un ensemble de couvercle d'embrayage (46) selon l'une quelconque des revendications 1 à 6, la tige (14) de l'élément d'équilibrage (10) pénétrant en particulier dans une ouverture (48) du plateau de réaction (40).

**8.** Procédé d'équilibrage d'un embrayage (26), dans lequel un embrayage (26) comprenant un couvercle d'embrayage (24) est fourni, le couvercle d'embrayage (24) comprenant une ouverture de carter (22) limitée par une paroi (20), ensuite un élément d'équilibrage (10) est inséré dans l'ouverture de carter (22) le long d'une direction d'insertion (50), lequel élément d'équilibrage comprend une tige (14) destinée à être insérée dans l'ouverture de carter (22) du couvercle d'embrayage (24), une tête (12) faisant saillie axialement à partir de la tige (14) et destinée à limiter une profondeur d'insertion, et des arêtes de coupe (30) faisant saillie radialement à partir de la tige (14) et servant à la déformation plastique d'une paroi (20) entourant l'ouverture de carter (22), une butée de déformation (36) disposée de manière espacée des arêtes de coupe (30) étant prévue entre les arêtes de coupe (30) et la tête (12), et la paroi (20) étant déformée plastiquement par la butée de déformation (36) de telle sorte que l'élément d'équilibrage (10) soit retenu de manière imperdable dans le couvercle de carter (24).

**9.** Procédé selon la revendication 8, dans lequel l'élément d'équilibrage (10), lors de l'insertion dans l'ouverture de carter (22), découpe tout d'abord des rainures (34) s'étendant sensiblement axialement dans la paroi (20) puis les rainures (34) sont au moins partiellement fermées par l'élément d'équilibrage (10) au niveau d'un côté axial orienté à l'opposé de la direction d'insertion (50) par une déformation plastique de la paroi (20).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009007829 A1